# EUROPÄISCHE PATENTSCHRIFT

(11) **EP 3 332 143 B1**
(45) Veröffentlichungstag und Bekanntmachung des Hinweises auf die Patenterteilung: **06.03.2019**
(21) Anmeldenummer: 16744791.1
(22) Anmeldetag: 29.07.2016
(51) Int. Cl.: F16D 51/20, F16D 65/09

(54) **LAGERELEMENT**
BEARING ELEMENT
ÉLÉMENT FORMANT PALIER

(30) Priorität: 03.08.2015 DE 102015112715
(43) Veröffentlichungstag der Anmeldung: 13.06.2018
(73) Patentinhaber: SAF-HOLLAND GmbH, 63856 Bessenbach (DE)
(72) Erfinder: STEGMANN, Rainer, 63768 Hösbach (DE); KREBS, Marc, 63856 Bessenbach (DE)
(74) Vertreter: Müller Schupfner & Partner Patent- und Rechtsanwaltspartnerschaft mbB
(86) Internationale Anmeldenummer: PCT/EP2016/068168
(87) Internationale Veröffentlichungsnummer: WO 2017/021302

(56) Entgegenhaltungen:
- FR-A1- 2 150 423
- GB-A- 343 197
- US-A- 5 443 135
- US-A1- 2012 103 737

## Beschreibung

Die vorliegende Erfindung betrifft ein Lagerelement insbesondere zum Einsatz mit einer Bremsbacke einer Trommelbremse eines Nutzfahrzeuges.

Bei aus dem Stand der Technik bekannten Bremsbacken ist üblich, die Bremsbacken an einem ersten distalen Ende durch eine Betätigungseinheit beispielsweise eine Spreizkeileinheit oder eine S-Nocken-Betätigungseinheit mit einer Kraft zu beaufschlagen und an einem zweiten Ende schwenkbar an einem Bremsträger zu lagern. Dabei müssen im Bereich der schwenkbaren Lagerung der Bremsbacke hohe Kräfte übertragen werden und es ist eine mehrdimensionale Schwenkbarkeit der Bremsbacke relativ zum Bremsträger erforderlich, um nicht nur die Betätigungsbewegung der Bremsbacke bei Einleiten eines Bremsvorganges durchführen zu können, sondern auch Verformungen der Bremstrommel derart ausgleichen zu können, dass stets die volle Belagfläche des Bremsbelages der Bremsbacke an der Innenseite der Bremstrommel zur Anlage kommt. Im Stand der Technik sind bisher Lagerungen mit einer Kugel und einer entsprechend korrespondierenden Kugelpfanne sowohl an dem Bremsträger als auch an der Bremsbacke vorgesehen. Diese aus dem Stand der Technik bekannten Lagerungen weisen den Nachteil auf, dass sie zum einen schwer sind und zum anderen für ihre Montage stets zumindest drei Bauteile zu hantieren sind. Der Montageaufwand für eine solche Bremsbackenlagerung ist somit relativ hoch und steigert die Fertigungskosten für aus dem Stand der Technik bekannte Trommelbremsen.

Die US-2012/0103737 A1 betrifft eine Trommelbremse mit einem Lagerelement, welches an einer Bremsbacke festlegbar ist und einen Stützbereich zur Abstützung an einem Bremsträger.

Die FR 2 150 423 A1, GB 343 197 A und US-5,443,135 A betreffen Trommelbremsen, bei welchen die Bremsbacken über Lagerelemente an einem Bremsträger gelagert sind.

Aufgabe der vorliegenden Erfindung ist es, ein Lagerelement für Trommelbremsen bereit zu stellen, welches einfach herzustellen ist und einen möglichst geringen Montageaufwand benötigt. Weiterhin soll das Gewicht der Lagerung von Bremsbacken reduziert werden.

Diese Aufgabe wird mit einem Lagerelement gemäß Anspruch 1 gelöst. Weitere Vorteile und Merkmale der vorliegenden Erfindung ergeben sich aus den abhängigen Ansprüchen.

Erfindungsgemäß umfasst das Lagerelement zumindest einen Haltebereich zur formschlüssigen Festlegung an einer Bremsbacke und einen Stützbereich zur mittelbaren oder unmittelbaren Abstützung an einer Trageinheit, wobei der Haltebereich eine erste Haltegeometrie aufweist, die ausgelegt ist entlang einer ersten Halteachse eine Hinterschneidung mit der Bremsbacke zu bilden, wobei der Stützbereich ausgelegt ist eine entlang der Halteachse wirkende Stützkraft unmittelbar oder mittelbar an die Trageinheit und umgekehrt zu übertragen. Als Trageinheit wird im Rahmen der vorliegenden Erfindung vorzugsweise ein Bremsträger angesehen. Die Trageinheit weist insbesondere bevorzugt zumindest eine Lagerpfanne zur schwenkbaren Lagerung einer Bremsbacke auf. Der Haltebereich des Lagerelements weist mit Vorteil zumindest einen Vor- oder Rücksprung auf, welcher mit einem jeweils korrespondierenden Vor- oder Rücksprung an einer Bremsbacke in formschlüssigen Eingriff bringbar ist, derart dass eine Hinterschneidung zwischen dem Eingriffsabschnitt der Bremsbacke und dem Haltebereich des Lagerelements entlang einer ersten Halteachse hergestellt ist. Dabei ist die erste Haltegeometrie des Haltebereiches am Lagerelement vorzugsweise als von der restlichen Geometrie des Haltebereiches hervorragende oder zurückspringende Blechlippe ausgebildet. Als Blechlippe wird im vorliegenden Zusammenhang insbesondere ein Bereich in einem Blech bezeichnet, welcher bis auf eine Verbindungskante mit dem restlichen Blechkörper aus dem Blechkörper ausgeschnitten ist und derart verbogen ist, dass er aus der blechartigen Geometrie des Blechkörpers herausragt. Es hat sich gezeigt, dass derart ausgebildete Haltegeometrien besonders einfach herzustellen sind, da lediglich ein lokaler Trennvorgang durchgeführt werden muss und die erste Haltegeometrie lediglich aus dem Material des Lagerelements heraus gebogen wird. Hierbei wird insbesondere ein geringes Gewicht erzielt da kein zusätzliches Gewicht durch das Vorsehen von Vorsprüngen an beispielsweise einem Gusskörper erzeugt wird. Der Stützbereich ist dafür ausgelegt sich direkt, also unmittelbar, oder indirekt, also beispielsweise über ein dazwischen angeordnetes Kraftübertragungselement, an einer Trageinheit eines Bremssystems abzustützen. Dies bedeutet dass der Stützbereich vorzugsweise eine Kontaktfläche aufweist, welche entweder unmittelbar an der Trageinheit zur Anlage bringbar ist, oder einen entsprechenden Aufnahmebereich für die Aufnahme einer Kugel, welche aus dem Stand der Technik bekannt ist und vorzugsweise als Kraftübertragungselement dient. Es hat sich gezeigt, dass die Ausbildung des Lagerelements mit einem Haltebereich und einem Stützbereich eine besonders einfache Verwendung in einer Vielzahl von verschiedenen Trommelbremsen insbesondere im Zusammenspiel mit verschiedenen Bremsbacken für Trommelbremsen ermöglicht. Besonders bevorzugt kann hierfür der Haltebereich auch eine Vielzahl verschiedener erster Haltegeometrien aufweisen von denen jeweils nur ausgewählte zur Festlegung mit einem bestimmten Bremsbackentyp ausgelegt sind.

Besonders bevorzugt weist der Haltebereich zwei erste Haltegeometrien auf, wobei an je einem Schenkel des Lagerelements eine erste Haltegeometrie angeordnet ist, die mit je einem Backensteg der Backeneinheit in formschlüssigen Eingriff bringbar ist. Besonders bevorzugt ist das Lagerelement daher zur Festlegung an einer Bremsbacke, welche zwei Backenstege aufweist, ausgebildet. Für diesen Zweck weist das Lagerelement einen Haltebereich auf, welcher zwei Schenkel umfasst an denen jeweils eine erste Haltegeometrie angeordnet ist. Vorzugsweise sind die beiden Schenkel des Haltebereiches voneinander beabstandet, wobei sich die Schenkel mit besonderem Vorteil im Wesentlichen quer zum Stützbereich, mit anderen Worten also im Wesentlichen quer zur Haupterstreckung des Stützbereiches, erstrecken. Im Querschnitt bildet somit mit Vorteil der Stützbereich gemeinsam mit den beiden Schenkeln eine im Wesentlichen u-förmige oder c-förmige Kontur. Indem an beiden Schenkeln des Lagerelements eine erste Haltegeometrie vorgesehen ist, kann eine besonders feste formschlüssige Verbindung zwischen dem Lagerelement und einer Bremsbacke hergestellt werden, welche die Übertragung von auf die Bremsbacke wirkenden Kräfte, Schwingungen und Momenten verbessert. Hierdurch ist eine verbesserte Sicherheit gegen Lösen des Lagerelements von der Bremsbacke gewährleistet.

Mit Vorteil ist der Stützbereich im Wesentlichen zwischen den ersten Haltegeometrien angeordnet. Als Anordnung im Wesentlichen zwischen den ersten Haltegeometrien wird im Rahmen der vorliegenden Erfindung eine Anordnung des Stützbereiches angesehen, bei der eine Projektion des Stützbereiches in eine zwischen den Haltegeometrien aufgespannte Ebene, eine zwischen den Haltegeometrienen verlaufende Linie schneidet. Mit anderen Worten schneidet der Stützbereich in einer Ansicht entlang der Halteachse eine zwischen den Haltegeometrien verlaufende gedachte Linie. Der Vorteil dieser Anordnung der Haltegeometrien relativ zum Stützbereich ist, dass eine auf den Stützbereich wirkende Kraft möglichst gleichmäßig an die Haltegeometrien übertragen werden kann. Außerdem kann eine Verwindung des Lagerelements durch einseitige Lastübertragung vermindert werden.

Besonders bevorzugt ist der Stützbereich im Wesentlichen mittig oberhalb zwischen den ersten Haltegeometrien angeordnet. Als Anordnung mittig und oberhalb der Haltegeometrien ist definiert, dass eine Projektion des Stützabschnitts in eine durch beide Haltegeometrien verlaufende Ebene mittig zu einer zwischen den Haltegeometrien verlaufenden Linie angeordnet ist. Dabei ist vorzugsweise der Flächenmittelpunkt der Projektion mittig auf der Linie zwischen den Haltegeometrien angeordnet. Insbesondere für den bevorzugten Fall, dass der Stützbereich ebenensymmetrisch ausgebildet ist, verläuft die Symmetrieebene des Stützbereiches orthogonal zu einer zwischen den Haltegeometrien verlaufenden Linie und schneidet diese Linie mittig. Der Vorteil dieser Ausführungsform ist, dass in den Haltegeomietrien stets im Wesentlichen dieselben Kraftbeträge aufgenommen werden und somit eine optimale Anpassung der Materialstärke der Haltegeometrien an die zu erwartenden Kräfte möglich ist. Eine Überdimensionierung der Haltegeometrien aus Sicherheitsgründen kann auf diese Weise minimiert werden.

Darüber hinaus bevorzugt beweist der Haltebereich eine zweite Haltegeometrie auf, wobei die zweite Haltegeometrie ausgelegt ist, eine Stützkraft in nur einer Richtung entlang der Halteachse vom Lagerelement auf die Bremsbacke zu übertragen. Die zweite Haltegeometrie dient dabei vorzugsweise der Unterstützung des Formschlusses, welcher von der ersten Haltegeometrie hergestellt wird. Dabei ist die zweite Haltegeometrie in einer ersten bevorzugten Ausführungsform als Schulter ausgelegt, welche am Haltebereich ausgebildet ist und dafür vorgesehen ist, sich an einer entsprechenden Auflagefläche an der Bremsbacke abzustützen. Vorzugsweise überträgt die zweite Haltegeometrie im Wesentlichen eine Kraft, welche bei der Abstützung des Lagerelements an der Bremsbacke auftritt. Mit anderen Worten überträgt die zweite Haltegeometrie dabei vorzugsweise den größten Anteil der Kraft, die von dem Bremsträger, respektive der Trageinheit an das Backenelement bzw. an die Bremsbacke übertragen wird. Diese Kraft ist im Vergleich zu den Haltekräften in anderen Richtungen vergleichsweise hoch, da während eines Bremsvorganges die beiden distalen Enden der Bremsbacke mit einer hohen Kraft gegen die Innenseite der Bremstrommel gepresst werden. Somit ist die zwischen der Trageinheit und der Bremsbacke wirkende Kraft im Wesentlichen so groß wie die von einer Betätigungseinheit auf die Bremsbacke übertragene Stellkraft. Es versteht sich daher, dass die zweite Haltegeometrie insbesondere dafür ausgelegt sein muss, eine besonders hohe Stützkraft entlang der Halteachse vom Lagerelement auf die Bremsbacke zu übertragen.

Besonders bevorzugt ist die zweite Haltegeometrie als Schulter ausgebildet, welche auf einer Fläche oder Kante der Bremsbacke zur Auflage bringbar ist. Die zweite Haltegeometrie weist zur Übertragung der Stützkraft eine Erstreckung im Wesentlichen quer zur Halteachse auf. Somit erstreckt sich die zweite Haltegeometrie im Wesentlichen quer zur Gesamterstreckung des Haltebereiches. Dank der schulterförmigen Ausbildung der zweiten Haltegeometrie kann vorzugsweise die Gefahr eines Abscherens am Lagerelement verhindert werden.

Besonders bevorzugt ist das Lagerelement als einstückiges Blechteil ausgebildet. Es hat sich gezeigt, dass insbesondere in Bezug auf die Fertigungskosten die Ausbildung des Lagerelements als Blechteil eine deutliche Kostenersparnis und Zeitersparnis bei der Herstellung erreicht. Insbesondere im Vergleich zu aus dem Stand der Technik bekannten, als Gussteil ausgebildeten Elementen für Bremsbacken, ist der Fertigungsaufwand deutlich geringer, da eine weniger aufwendige Maschinerie erforderlich ist und die beispielsweise für die Abkühlung der gegossenen Bauteile erforderliche Zeit nicht benötigt wird. Auch gegenüber mit Schweißverfahren hergestellten Lagerelementen, weist die Ausbildung des Lagerelements als einstückiges Blechteil deutliche Vorteile auf, da insbesondere der Materialverzug und die Thermospannungen in dem Lagerelement bei der vorliegenden Erfindung wesentlich geringer sind. Darüber hinaus hat es sich gezeigt, dass bei einem durch Umformen ausgebildeten Blechkörper besonders vorteilhafte Materialeigenschaften erzeugen lassen. So wird beim Umformen, insbesondere bevorzugt beim Kaltumformen, eine lokale Materialbefestigung erreicht, welche auch als sogenannte Kaltverfestigung bekannt ist, und insbesondere eine Steigerung der Lebensdauer und der maximalen übertragbaren Kräfte über das Lagerelement erlaubt. Die einstückige Ausbildung des Lagerelements verringert dabei insbesondere den Montageaufwand, da keine Einzelteile beispielsweise durch Schweißen zusammengefügt werden müssen. Gleichzeitig wird der Temperaturverzug an den mit anderen Bauteilen einer Bremsbacke oder einem Bremsträger in Eingriff gelangenden Bereichen (Haltebereich, Stützbereich) mit höherer Maßgenauigkeit erreicht.

In einer besonders bevorzugten Ausführungsform ist die erste Haltegeometrie als rückstellfähiger Kragbereich, oder bevorzugt pfeilförmig ausgebildet, wobei die erste Haltegeometrie mit geringerer Kraft entlang der Halteachse in Eingriff mit der Bremsbacke bringbar ist und in entgegengesetzter Richtung einen sicheren Formschluss mit der Bremsbacke gewährleistet. Der Kragbereich ragt vorzugsweise nach außen, bzw. steht vom Schenkel des Lagerelements ab. Die erste Haltegeometrie ist somit insbesondere bevorzugt dafür ausgelegt an der Bremsbacke "eingeclipst" zu werden. Dies erleichtert die Montage des Lagerelements an der Bremsbacke und spart Zeit und erlaubt es einem Monteur mit nur minimalem Werkzeugeinsatz eine Bremsbacke in formschlüssigen Eingriff mit dem Lagerelement zu bringen. Es versteht sich, dass dabei die erste Haltegeometrie während des Montagevorganges elastisch verformt wird und durch die elastische Rückstellkraft des vorzugsweise metallischen Herstellungsmaterials des Lagerelements in eine Stellung strebt, in welcher bei vollständigem Sitz der ersten Haltegeometrie in der entsprechenden korrespondierenden Eingriffsgeometrie an der Bremsbacke ein Formschluss hergestellt ist.

In einer bevorzugten Ausführungsform weist der Stützbereich eine Aufnahmegeometrie zur Aufnahme eines Kraftübertragungskörpers auf, wobei der Kraftübertragungskörper die zwischen der Trageinheit und dem Lagerelement wirkende Stützkraft überträgt. Als Kraftübertragungskörper eignet sich eine Kugel, besonders bevorzugt aus gehärtetem Material oder mit zumindest einer gehärteten Oberfläche. Diese Kugel erlaubt eine Schwenkbewegung der Bremsbacke relativ zur Trageinheit mit Schwenkrichtungen, welche im Umfang von 360 Grad ausgehend von der Halteachse möglich sind. Der Vorteil der Verwendung eines Kraftübertragungskörpers in Form einer Kugel ist, dass diese auf dem Markt kostengünstig erworben werden können und durch die entsprechende Anpassung der Oberflächenhärte eine lange Lebensdauer erreichen können. Darüber hinaus können die Kraftübertragungskörper unabhängig von dem Lagerelement und der Trageinheit bei Erreichen der Lebensdauergrenze, einem übermäßigen Verschleiß, oder bei lokalen Beschädigungen einfach ausgetauscht werden. Alternativ zu der kugelförmigen Ausbildung könnte der Kraftübertragungskörper auch tonnenförmig ausgebildet sein, wodurch sich verschiedene Schwenkbewegungen und mögliche Schwenkwinkel in verschiedenen Richtungen einer Verschwenkung von der Halteachse ergeben.

In einer alternativen Ausführungsform ist der Stützbereich des Lagerelements ballig ausgebildet und wobei die konvexe Seite des Stützbereiches auf der der ersten Haltegeometrie abgewandten Seite des Lagerelements angeordnet ist. Alternativ zur Ausbildung des Stützbereiches derart, dass dieser eine Aufnahmegeometrie zur Aufnahme eines Kraftübertragungskörpers aufweist, ist der Stützbereich selbst ballig ausgebildet, wobei die konvexe Seite des Stützbereiches somit ähnlich zur Außenfläche eines vorzugsweise kugelförmigen Kraftübertragungskörper ausgebildet ist. Auf diese Weise kann eine Funktionsintegration am Lagerelement durchgeführt werden, da zum einen die Funktion der Abstützung am Bremsbackenelement und zum anderen die Funktion der schwenkbaren Lagerung der Bremsbacke an der Trageinheit über eine vorzugsweise kugelförmige Abstützgeometrie im Lagerelement integriert werden kann. Auf diese Weise kann die Anzahl der erforderlichen Bauteile deutlich reduziert werden wodurch sich insgesamt der Fertigungsaufwand reduziert und der Montageaufwand zur Herstellung einer Bremsbacke für eine Trommelbremse deutlich reduziert ist. Darüber hinaus sind die Herstellungskosten für ein einstückiges Lagerelement durch Umformen aus einem Blechteil vergleichsweise gering zur Herstellung eines gehärteten Kugelelements und einer korrespondierenden Lagerpfanne. Darüber hinaus ist die Ausbildung des Stützbereiches derart, dass er die ballige Außenfläche eines separaten Kraftübertragungselements ersetzt wesentlich leichter, als eine aus einem Kraftübertragungselement und einem entsprechenden Stützelements zusammengesetzter Einheit. Die konvexe Seite des Stützbereiches ist dabei vorzugsweise auf der der ersten Haltegeometrie gegenüber liegenden Seite des Lagerelements angeordnet. Das heißt mit anderen Worten, dass der Stützbereich im Wesentlichen von der ersten Haltegeometrie und somit auch von dem Bremsbackenelement, welches zur Festlegung an dem Lagerelement vorgesehen ist, abgewandt ist.

Besonders bevorzugt weist das Lagerelement eine jeweils senkrecht zur Außenfläche gemessene Wandstärke auf, wobei die Abweichung der Wandstärke von einer mittleren Wandstärke ein 0,01- bis 0,2-faches, vorzugsweise ein 0,01- bis 0,1-faches und besonders bevorzugt ein 0,05-bis 0,1-faches der mittleren Wandstärke nicht überschreitet. Mit anderen Worten bleibt die Wandstärke des Lagerelements trotz der an ihm durchgeführten Umformvorgänge vorzugsweise im Wesentlichen konstant, das heißt mit anderen Worten, dass die Abweichung der Wandstärke von der mittleren Wandstärke ein 0,2-faches des Mittelwertes der Wandstärke vorzugsweise nicht überschreitet. Auf diese Weise ist gewährleistet, dass in den verschieden stark umgeformten Bereichen des Lagerelements, insbesondere im Bereich des Stützbereiches und der ersten Haltegeometrie immer eine ausreichend hohe Wandstärke zur Verfügung steht, um die auf das Lagerelement wirkenden Kräfte und vom Lagerelement an die Bremsbacke übertragenden Kräfte mit hoher Sicherheit übertragen zu können. Besonders bevorzugt ist die Herstellung des Lagerelements derart vorgesehen, dass die Wandstärke einer Abweichung von lediglich einem 0,01-fachen der mittleren Wandstärke aufweist, wodurch sich insbesondere auch die Fertigungsvorgänge am Lagerelement mit geringerem Energieaufwand durchführen lassen, da ein geringerer Umformgrad an dem Blechteil erzeugt wird.

Besonders bevorzugt ist das Lagerelement durch Kaltumformen hergestellt, wobei in den Verformungsbereichen kalt verfestigtes Gefüge vorhanden ist. Kalt verfestigtes Gefüge zeichnet sich durch eine hohe Festigkeit und eine gesteigerte Bruchsicherheit und eine gesteigerte Dehngrenze aus. Dabei wird kaltverfestigtes Gefüge durch die während des Umformvorganges ablaufenden Gefügeverschiebungen und Gefügeverzerrungen erzeugt. Mit Vorteil kann auf diese Weise im Bereich des kaltumgeformten Stützbereiches des Lagerelements sowie im Bereich der kaltverfestigten ersten Haltegeometrie und der kaltverfestigten zweiten Haltegeometrie eine höhere Festigkeit erreicht werden und somit die vom Lagerelement aufnehmbaren Kräfte deutlich gesteigert werden. Darüber hinaus kann es bevorzugt sein, dass im Stützbereich des Lagerelements eine Oberflächenversiegelung oder Oberflächenhärtung vorgesehen ist. Insbesondere bevorzugt kann durch chemische Oberflächenbehandlung im Stützbereich eine größere Härte erreicht werden, welche eine Steigerung der Lebensdauer an den an der Trageinheit reibenden Flächen des Stützbereiches erlaubt.

Weitere Vorteile und Merkmale der vorliegenden Erfindung ergeben sich aus der nachfolgenden Beschreibung ausgewählter Ausführungsformen anhand der beigefügten Figuren. Es versteht sich, dass einzelne Merkmale, die nur in einer der Ausführungsformen gezeigt sind, auch für andere Ausführungsformen Anwendung finden können, sofern sich dies nicht aufgrund technischer Gegebenheiten verbietet oder explizit ausgeschlossen wurde. Es zeigen:
Fig. 1 eine Schnittansicht einer bevorzugten Ausführungsform des Lagerelements,
Fig. 2 eine weitere bevorzugte Ausführungsform des erfindungsgemäßen Lagerelements,
Fig. 3 eine Schnittansicht einer weiteren bevorzugten Ausführungsform des erfindungsgemäßen Lagerelements,
Fig. 4 eine weitere Ansicht einer bevorzugten Ausführungsform eines erfindungsgemäßen Lagerelements
Fig. 5 eine Schnittansicht einer weiteren bevorzugten Ausführungsform des erfindungsgemäßen Lagerelements.

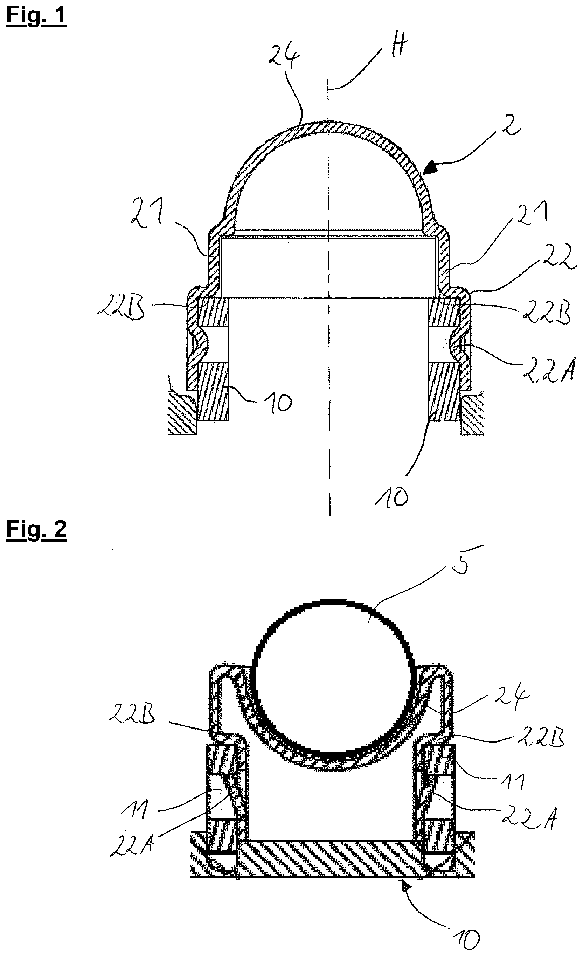

Das in Fig. 1 dargestellte Lagerelement 2 weist einen Stützbereich 24 sowie einen Halteberich 22 auf. Der Haltebereich 22 wiederum umfasst vorzugsweise 2 Schenkel 21, welche voneinander beabstandet am Stützbereich 24 festgelegt sind. Der Stützbereich ist vorzugsweise ballig gekrümmt, insbesondere bevorzugt dabei zumindest bereichsweise kugelförmig gekrümmt. Der Haltebereich 22 weist eine erste Haltegeometrie 22a und eine zweite Haltegeometrie 22b auf, welche jeweils zum formschlüssigen Eingriff mit einer Bremsbacke 10 ausgelegt sind. Insbesondere bevorzugt weist die Bremsbacke 10 dabei zwei Backenstege 11 auf, von denen jeweils einer mit jeweils einer ersten Haltegeometrie 22a und einer zweiten Haltegeometrie 22b in formschlüssigen Eingriff bringbar ist. Die erste Eingriffsgeometrie 22a ist dabei vorzugsweise als in Richtung der Bremsbacke 10 vorragender Vorsprung ausgebildet, welcher mit einem an der Bremsbacke 10 vorgesehenen Rücksprung formschlüssig korrespondierend in Eingriff steht. Die zweite Haltegeometrie 22b ist vorzugsweise als Schulter ausgebildet, welche auf einer entsprechenden Fläche oder Kante der Bremsbacke 10, vorzugsweise deren Backensteg 11, zur Auflage und zur Abstützung bringbar ist. Vorzugsweise überträgt die zweite Haltegeometrie 22b dabei eine längs oder parallel zur Halteachse H wirkende Kraft vom Stützbereich 24 über die Schenkel 21 des Haltebereiches 22 an die Bremsbacke 10. Besonders bevorzugt ist das Lagerelement 2 als Blechteil ausgeführt. Dabei ist das Lagerelement 2 vorzugsweise einstückig ausgebildet, wobei die entsprechenden Geometrien des Stützbereiches 24, der Haltegeometrien 22a und 22b durch Umformen hergestellt sind.

Bei der in Fig. 2 gezeigten bevorzugten Ausführungsform des Lagerelements 2 ist der Stützbereich 24 zur Aufnahme eines Kraftübertragungselements 5 ausgebildet. Das Kraftübertragungselement 5 ist dabei vorzugsweise eine Kugel, welche zur schwenkbaren Lagerung des Lagerelements an einer Trageinheit, bzw. einem Bremsträger eines Trommelbremssystems dient. Entsprechend der Außengeometrie des Kraftübertragungselements 5 weist der Stützbereich 24 eine im Wesentlichen kugelförmig oder teilweise kugelförmig ausgebildete Aufnahmegeometrie auf. Darüber hinaus ist gezeigt, dass die erste Haltegeometrie 22a als rückstellfähiger Kragbereich, oder mit anderen Worten im Wesentlichen pfeilförmig, ausgebildet ist und somit zum Einclipsen des Lagerelements 2 an einer Bremsbacke 10, bzw. an den in Fig. 2 gezeigten Bremsstegen 11 geeignet ist. Auf diese Weise kann das Lagerelement 2 von in der Figur oben aus in formschlüssigen Eingriff mit der Bremsbacke 10 gebracht werden, indem einfach von oben eine Kraft angelegt wird und die erste Haltegeometrie 22a temporär derart verformt wird, dass sie zwischen den Backenstegen 11 nach unten rutschen kann, solange bis die zweite Haltegeometrie 22b auf der Bremsbacke 10 zur Auflage kommt und gleichzeitig die erste Haltegeometrie 22a derart in ihre ursprüngliche Stellung zurückfedert, dass ein Formschluss zwischen der ersten Haltegeometrie 22a und der entsprechend korrespondierenden Geometrie an den Backenstegen 11 entsteht. Auf diese Weise ist das Lagerelement 2 an der Bremsbacke 10 über den Eingriff der ersten Haltegeometrie 22a und der zweiten Haltegeometrie 22b zumindest gegen Verlagerung in zwei Richtungen gesichert. Vorzugsweise sichert die erste Haltegeometrie 22a das Lagerelement 2 auch gegen Verlagern relativ zur Bremsbacke 10 entlang der Betrachtungsrichtung in Fig. 2. Dies lässt sich insbesondere dadurch erreichen, dass der Eingriffsabschnitt an den Backenstegen jeweils eine vorzugsweise rechteckige Aussparung ist, wobei die in der Betrachtungsebene liegenden oder parallel zur Betrachtungsebene liegenden Wände der Aussparung gemeinsam mit der ersten Haltegeometrie 22a eine Hinterschneidung bilden, welche quer bzw. senkrecht zur Halteachse H wirkt.

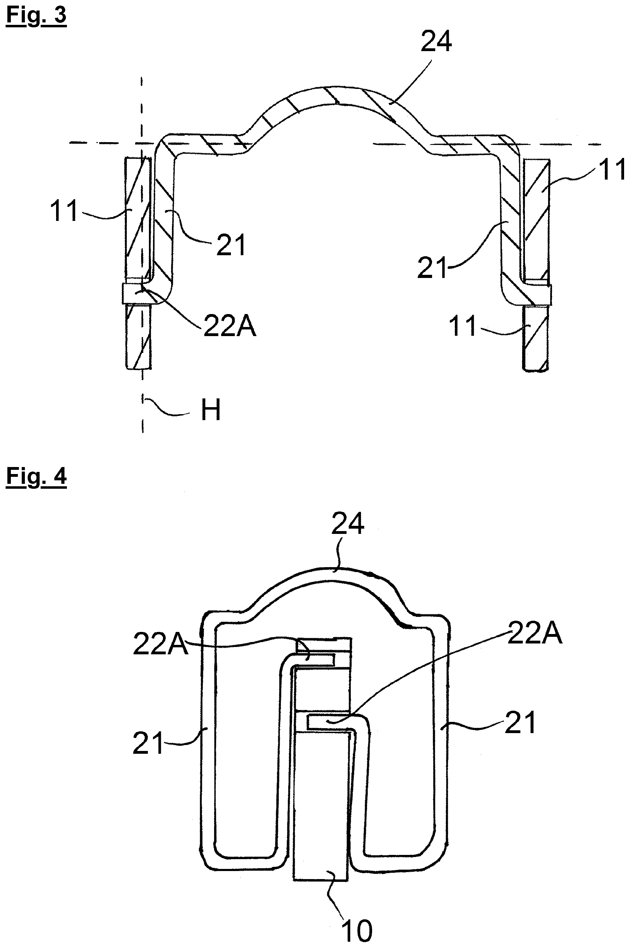

Fig. 3 zeigt eine weitere bevorzugte Ausführungsform, bei der am Lagerelement 2 zwei Schenkel 21 vorgesehen sind, die jeweils nur eine erste Haltegeometrie 22a aufweisen. Die erste Haltegeometrie 22a ist in diesem Fall für die Aufnahme sämtlicher Kräfte in beiden Richtungen längs oder parallel zur Halteachse H ausgelegt. Mit anderen Worten kann, wie in Fig. 3 gezeigt, auch auf eine zweite Haltegeometrie 22b verzichtet werden und das Lagerelement 2 trotzdem formschlüssig an einer Bremsbacke 10, insbesondere zwei Backenstege 11, wie in der Figur gezeigt, festgelegt werden.

Fig. 4 zeigt eine weitere bevorzugte Ausführungsform, bei der das Lagerelement 2 zur Festlegung an eine Bremsbacke 10, welche nur einen Backensteg 11 aufweist, ausgelegt ist. Hierfür sind insbesondere die beiden Schenkel 21 des Lagerelements derart geformt, dass die an den Schenkeln vorgesehenen ersten Haltegeometrien 22a mit ein und demselben Backensteg 11 der Bremsbacke 10 in Eingriff bringbar sind. Die in Fig. 4 gezeigte bevorzugte Ausführungsform des Lagerelements eignet sich somit zum Einsatz an Bremsbacken 10, welche nur einen Backensteg 11 aufweisen.

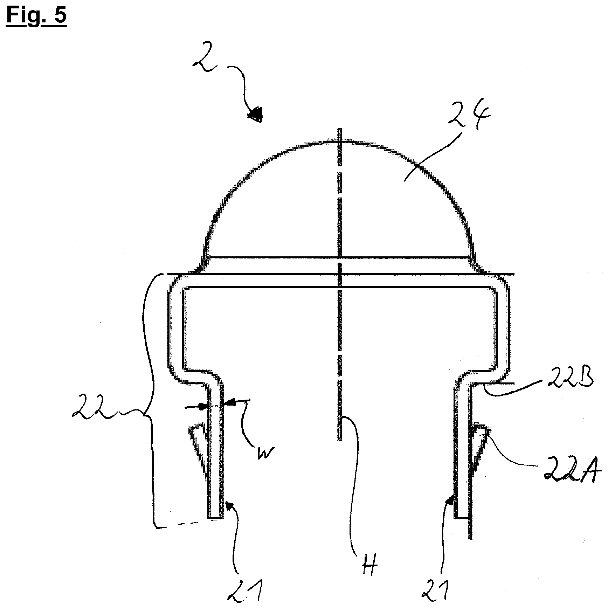

Fig. 5 zeigt eine weite bevorzugte Ausführungsform des erfindungsgemäßen Lagerelements. Dabei entspricht der Haltebereich 22 des Lagerelements im Wesentlichen dem Haltebereich 22 des in Fig. 2 gezeigten Lagerelements 2. Hingegen ist der Stützbereich 24 des in Fig. 5 gezeigten Lagerelements vorzugsweise ballig gekrümmt ausgebildet, wobei im Unterschied zu dem in Fig. 2 gezeigten Gegenstand, das in Fig. 5 gezeigte Lagerelement 2 die Funktionen des Lagerelements 2 und des Kraftübertragungselements 5 übernimmt. Das in Fig. 2 gezeigte Lagerelement 2 ist einstückig ausgebildet, wobei insbesondere bevorzugt ein blechförmiges Ausgangsmaterial verwendet wird und durch Umformen in die in Fig. 5 gezeigte Form gebracht wird. Insbesondere bevorzugt ist dabei die Wandstärke w des Lagerelements 2 mit einer nur sehr geringen Abweichung von 0,01 bis 0,2 bezogen auf die mittlere Wandstärke des Lagerelements vorgesehen. Die in Fig. 5 gezeigten ersten Haltegeometrien 22a sind vorzugsweise als rückstellfähiger Kragbereich ausgebildet, um ein Einklipsen des Lagerelements 2 an der nicht gezeigten Bremsbacke 10 zu ermöglichen.

### Bezugszeichenliste:

- 2: - Lagerelement
- 5: - Kraftübertragungselement
- 10: - Bremsbacke
- 11: - Backensteg
- 21: - Schenkel
- 22: - Haltebereich
- 22A: - erste Haltegeometrie
- 22B: - zweite Haltegeometrie
- 24: - Stützbereich
- H: - Halteachse
- w: - Wandstärke

## Patentansprüche

1. Lagerelement (2) zum Einsatz in einer Trommelbremse,
umfassend einen Haltebereich (22) zur formschlüssigen Festlegung an einer Bremsbacke (10) und einen Stützbereich (24) zur mittelbaren oder unmittelbaren Abstützung an einer Trageinheit,
**dadurch gekennzeichnet, dass** der Haltebereich (22) eine erste Haltegeometrie (22A) aufweist, die ausgelegt ist, entlang einer ersten Halteachse (H) eine Hinterschneidung mit der Bremsbacke (10) zu bilden,
wobei der Stützbereich (24) ausgelegt ist, eine entlang der Halteachse (H) wirkende Stützkraft mittelbar oder unmittelbar an die Trageinheit und umgekehrt zu übertragen.

2. Lagerelement (2) nach Anspruch 1,
wobei der Haltebereich (22) zwei erste Haltegeometrien (22A) aufweist, wobei an je einem Schenkel (21) des Lagerelements (2) eine erste Haltegeometrie (22A) angeordnet ist, die mit je einem Backensteg (11) der Bremsbacke (10) in formschlüssigen Eingriff bringbar sind.

3. Lagerelement (2) nach Anspruch 2,
wobei der Stützbereich (24) zwischen den ersten Haltegeometrien (22A) angeordnet ist.

4. Lagerelement (2) nach Anspruch 3,
wobei der Stützbereich (24) mittig oberhalb zwischen den ersten Haltegeometrien (22A) angeordnet ist.

5. Lagerelement (2) nach einem der vorhergehenden Ansprüche,
wobei der Haltebereich (22) eine zweite Haltegeometrie (22B) aufweist, wobei die zweite Haltegeometrie (22B) ausgelegt ist, eine Stützkraft in nur einer Richtung entlang der Halteachse (H) vom Lagerelement (2) auf die Bremsbacke (10) zu übertragen.

6. Lagerelement (2) nach Anspruch 5,
wobei die zweite Haltegeometrie (22B) als Schulter ausgebildet ist, welche auf einer Fläche oder Kante der Bremsbacke zur Auflage bringbar ist.

7. Lagerelement (2) nach einem der vorhergehenden Ansprüche,
wobei das Lagerelement (2) als einstückiges Blechteil ausgebildet ist.

8. Lagerelement (2) nach einem der vorhergehenden Ansprüche,
wobei die erste Haltegeometrie (22A) als rückstellfähiger Kragbereich ausgebildet ist,
wobei die erste Haltegeometrie (22A) mit geringer Kraft entlang der Halteachse (H) in Eingriff mit der Bremsbacke (10) bringbar ist und in entgegengesetzter Richtung einen sicheren Formschluss mit der Bremsbacke (10) gewährleistet.

9. Lagerelement (2) nach einem der vorhergehenden Ansprüche,
wobei der Stützbereich (24) eine Aufnahmegeometrie zur Aufnahme eines Kraftübertragungskörpers (5) aufweist,
wobei der Kraftübertragungskörper (5) die zwischen der Trageinheit und dem Lagerelement (2) wirkende Stützkraft überträgt.

10. Lagerelement (2) nach Anspruch 9,
wobei der Kraftübertragungskörper (5) kugelförmig ausgebildet ist.

11. Lagerelement (2) nach einem der Ansprüche 1 bis 8,
wobei der Stützbereich (24) ballig ausgebildet ist,
wobei die konvexe Seite des Stützbereiches (24) auf der der ersten Haltegeometrie (22A) abgewandten Seite des Lagerelements (2) angeordnet ist.

12. Lagerelement (2) nach einem der vorhergehenden Ansprüche,
wobei das Lagerelement (2) eine jeweils senkrecht zur Außenfläche gemessene Wandstärke (w) aufweist,
wobei die Abweichung der Wandstärke (w) von einer mittleren Wandstärke ein 0,01- bis 0,2-faches, vorzugsweise ein 0,01- bis 0,1-faches und besonders bevorzugt ein 0,05- bis 0,1-faches der mittleren Wandstärke (w) nicht überschreitet.

13. Lagerelement (2) nach einem der vorhergehenden Ansprüche,
wobei das Lagerelement (2) durch Kaltumformen hergestellt ist,
wobei in den Verformungsbereichen kaltverfestigtes Gefüge vorhanden ist.

## Claims

1. A bearing element (2) for use in a drum brake,
comprising a holding region (22) for interlocking on a brake shoe (10) and a support region (24) for indirect or direct support on a carrying unit, **characterized in that** the holding region (22) has a first holding geometry (22A) which is designed to form an undercut with the brake shoe (10) along a first holding axis (H),
wherein the support region (24) is designed to transmit a support force, which acts along the holding axis (H), indirectly or directly to the carrying unit, and vice versa.

2. The bearing element (2) as claimed in claim 1,
wherein the holding region (22) has two first holding geometries (22A), wherein a first holding geometry (22A) is arranged respectively on a limb (21) of the bearing element (2), said holding geometries being able to be brought into interlocking engagement with one shoe web (11) each of the brake shoe (10).

3. The bearing element (2) as claimed in claim 2,
wherein the support region (24) is arranged between the first holding geometries (22A).

4. The bearing element (2) as claimed in claim 3,
wherein the support region (24) is arranged centrally above and between the first holding geometries (22A).

5. The bearing element (2) as claimed in one of the preceding claims,
wherein the holding region (22) has a second holding geometry (22B), wherein the second holding geometry (22B) is designed to transmit a support force from the bearing element (2) to the brake shoe (10) in only one direction along the holding axis (H).

6. The bearing element (2) as claimed in claim 5,
wherein the second holding geometry (22B) is designed as a shoulder which can be brought to rest on a surface or edge of the brake shoe.

7. The bearing element (2) as claimed in one of the preceding claims,
wherein the bearing element (2) is designed as an integral sheet metal part.

8. The bearing element (2) as claimed in one of the preceding claims,
wherein the first holding geometry (22A) is designed as a resettable cantilever region,
wherein the first holding geometry (22A) can be brought with a small force along the holding axis (H) into engagement with the brake shoe (10) and ensures a secure interlocking connection with the brake shoe (10) in the opposite direction.

9. The bearing element (2) as claimed in one of the preceding claims,
wherein the support region (24) has a receiving geometry for receiving a force transmission body (5),
wherein the force transmission body (5) transmits the support force acting between the carrying unit and the bearing element (2).

10. The bearing element (2) as claimed in claim 9,
wherein the force transmission body (5) is of spherical design.

11. The bearing element (2) as claimed in one of claims 1 to 8,
wherein the support region (24) is of convex design,
wherein the convex side of the support region (24) is arranged on that side of the bearing element (2) which faces away from the first holding geometry (22A).

12. The bearing element (2) as claimed in one of the preceding claims,
wherein the bearing element (2) has a wall thickness (w) measured in each case perpendicularly to the outer surface,
wherein the deviation of the wall thickness (w) from an average wall thickness does not exceed 0.01 to 0.2 times, preferably 0.01 to 0.1 times and particularly preferably 0.05 to 0.1 times the average wall thickness (w).

13. The bearing element (2) as claimed in one of the preceding claims,
wherein the bearing element (2) is produced by cold forming,
wherein there is a strain hardened structure in the deformation regions.

## Revendications

1. Élément formant palier (2) destiné à l'utilisation dans un frein à tambour, comportant une zone de retenue (22) pour l'immobilisation en coopération de forme sur une mâchoire de frein (10) et une zone d'appui (24) pour l'appui direct ou indirect contre une unité de support,
**caractérisé en ce que**
la zone de retenue (22) présente une première géométrie de retenue (22A) qui est conçue pour former une contre-dépouille avec la mâchoire de frein (10) le long d'un premier axe de retenue (H),
la zone d'appui (24) étant conçue pour transmettre une force d'appui agissant le long de l'axe de retenue (H) directement ou indirectement à l'unité de support, et inversement.

2. Élément formant palier (2) selon la revendication 1,
dans lequel
la zone de retenue (22) présente deux premières géométries de retenue (22A),
une première géométrie de retenue (22A) est agencée sur chacune branche (21) de l'élément formant palier (2), qui est susceptible d'être amenée en engagement par coopération de forme avec une âme respective (11) de la mâchoire de frein (10).

3. Élément formant palier (2) selon la revendication 2,
dans lequel
la zone d'appui (24) est agencée entre les premières géométries de retenue (22A).

4. Élément formant palier (2) selon la revendication 3,
dans lequel
la zone d'appui (24) est agencée au milieu au-dessus entre les premières géométries de retenue (22A).

5. Élément formant palier (2) selon l'une des revendications précédentes, dans lequel
la zone de retenue (22) présente une seconde géométrie de retenue (22B), la seconde géométrie de retenue (22B) est conçue pour transmettre une force d'appui dans une seule direction le long de l'axe de retenue (H) depuis l'élément formant palier (2) à la mâchoire de frein (10).

6. Élément formant palier (2) selon la revendication 5,
dans lequel
la seconde géométrie de retenue (22B) est réalisée sous forme d'épaulement qui est susceptible d'être amené en appui contre une surface ou une arête de la mâchoire de frein.

7. Élément formant palier (2) selon l'une des revendications précédentes, dans lequel
l'élément formant palier (2) est réalisé sous la forme d'une pièce en tôle monobloc.

8. Élément formant palier (2) selon l'une des revendications précédentes, dans lequel
la première géométrie de retenue (22A) est réalisée sous la forme d'une zone de collerette susceptible de rappel,
la première géométrie de retenue (22A) est susceptible d'être amenée en engagement avec la mâchoire de frein (10) avec une faible force le long de l'axe de retenue (H) et assure une coopération de forme sûre avec la mâchoire de frein (10) dans la direction opposée.

9. Élément formant palier (2) selon l'une des revendications précédentes, dans lequel
la zone d'appui (24) présente une géométrie de réception pour recevoir un corps transmetteur de force (5), et
le corps transmetteur de force (5) transmet la force d'appui qui agit entre l'unité de support et l'élément formant palier (2).

10. Élément formant palier (2) selon la revendication 9,
dans lequel
le corps transmetteur de force (5) est réalisé en forme sphérique.

11. Élément formant palier (2) selon l'une des revendications 1 à 8,
dans lequel
la zone d'appui (24) est réalisée de façon bombée, et
la face convexe de la zone d'appui (24) est agencée sur le côté de l'élément formant palier (2) détourné de la première géométrie de retenue (22A).

12. Élément formant palier (2) selon l'une des revendications précédentes, dans lequel
l'élément formant palier (2) présente une épaisseur de paroi (w) mesurée respectivement perpendiculairement à la surface extérieure, et
l'écart de l'épaisseur de paroi (w) par rapport à une épaisseur de paroi moyenne ne dépasse pas 0,01 à 0,2 fois, de préférence 0,01 à 0,1 fois, et de manière particulièrement préférée 0,05 à 0,1 fois l'épaisseur de paroi moyenne (w).

13. Élément formant palier (2) selon l'une des revendications précédentes, dans lequel
l'élément formant palier (2) est réalisé par déformation à froid, et
une structure écrouie à froid se présente dans les zones de déformation.
